# FASCICULE DE BREVET EUROPEEN

(11) **EP 3 548 869 B1**
(45) Date de publication et mention de la délivrance du brevet: **17.02.2021**
(21) Numéro de dépôt: 17816901.7
(22) Date de dépôt: 28.11.2017
(51) Int. Cl.: G01N 21/15

(54) **DISPOSITIF PASSIF DE RÉDUCTION DE LÀ POLLUTION D'UN ACCÈS OPTIQUE D'UN INSTRUMENT OPTIQUE**
PASSIVE VORRICHTUNG ZUR VERRINGERUNG DER VERSCHMUTZUNG EINES OPTISCHEN ZUGRIFFS EINES OPTISCHEN INSTRUMENTS
PASSIVE DEVICE FOR DECREASING THE POLLUTION OF AN OPTICAL ACCESS OF AN OPTICAL INSTRUMENT

(30) Priorité: 02.12.2016 FR 1601712
(43) Date de publication de la demande: 09.10.2019
(73) Titulaire: ARIANEGROUP SAS, 75015 Paris (FR)
(72) Inventeur: BAILET, Gilles, 75014 Paris (FR)
(74) Mandataire: Ahner, Philippe
(86) Numéro de dépôt international: PCT/FR2017/000221
(87) Numéro de publication internationale: WO 2018/100255

(56) Documents cités:
- CN-U- 202 141 436
- DE-A1- 3 638 472
- JP-A- 2008 154 127
- US-A1- 2004 021 087
- US-A1- 2015 293 015

## Description

La présente invention concerne un dispositif de réduction passive de la pollution d'un accès optique d'un instrument optique situé dans un environnement polluant.

Dans le cadre de la présente invention, l'instrument optique concerne tout type d'élément ou d'appareil optique, et notamment un instrument de mesure optique, apte à recevoir un rayonnement électromagnétique, notamment lumineux.

Bien que non exclusivement, la présente invention s'applique plus particulièrement à des mesures optiques réalisées sur une plate-forme spatiale, telle qu'un véhicule ou un objet et notamment un satellite, lors de la rentrée atmosphérique de cette plate-forme. De telles mesures optiques peuvent être réalisées pour collecter des données relatives à l'environnement existant lors de la rentrée atmosphérique, afin de pouvoir bien comprendre cet environnement, notamment dans le but de concevoir des éléments de protection appropriés, notamment des éléments de protection thermique.

Dans une telle application, comme les plates-formes de ce type comportent généralement des protections thermiques, en particulier de type ablatif, qui en raison de leur dégradation lors de la rentrée atmosphérique, génèrent des poussières, un environnement pollué est vite créé. Cet environnement pollué obstrue rapidement le chemin optique de l'instrument optique, rendant rapidement impossible toute mesure optique de sorte que la durée de mesure est alors très réduite. Cette durée de mesure est souvent de l'ordre de 20 à 30 secondes uniquement, alors que la phase de rentrée dure généralement de 10 à 20 minutes.

Une solution usuelle pour acquérir des mesures de rayonnement dans un tel environnement polluant est d'équiper la plate-forme spatiale d'un empilement de boucliers thermiques qui sont éjectés, successivement, lors de la rentrée atmosphérique. Chaque éjection d'un des boucliers thermiques permet d'avoir une exposition non polluée pour une mesure optimale du rayonnement du plasma de rentrée atmosphérique. Toutefois, ce système usuel n'est pas appliqué, car il est très contraignant (de conception et de mise en œuvre) et génère un nombre de mesures exploitables très limité.

Différentes méthodes ont été développées pour proposer un système moins contraignant permettant de répondre aux problématiques de rayonnement dans un environnement polluant (ablatif). Les méthodes usuelles utilisent, soit un contrôle de pression créant une surpression dans une cavité précédant l'instrument de mesure, soit un système de jet nettoyant la vitre (de l'instrument de mesure) des contaminants présents. Toutes ces méthodes usuelles sont donc actives. Les documents JP2008154127A, DE3638472A et CN202141436U illustrent de telles méthodes.

Or, de telles méthodes actives présentent de nombreux inconvénients. En particulier, elles sont coûteuses, présentent une masse souvent non négligeable, et sont relativement sensibles à l'environnement très contraignant dans lequel elles sont utilisées.

La présente invention a pour objet de remédier à ces inconvénients. Elle concerne un ensemble optique comprenant un instrument optique et un dispositif passif de réduction de la pollution d'un accès (ou chemin) optique d'un instrument optique situé dans un environnement polluant (ou contaminant).

Selon l'invention, ledit dispositif comporte une pièce pourvue :
- d'un canal pratiqué dans ladite pièce et présentant une première extrémité ouverte sur l'extérieur de la pièce de manière à déboucher dans l'environnement polluant, ledit canal présentant un axe sensiblement rectiligne et un diamètre général moyen d ; et
- d'une cavité pratiquée dans ladite pièce à une seconde extrémité du canal, opposée à ladite première extrémité, ladite seconde extrémité du canal débouchant dans la cavité, ladite cavité présentant une extrémité ouverte opposée à ladite seconde extrémité du canal, cette extrémité ouverte étant en regard de l'instrument optique, ladite cavité présentant un diamètre général moyen D, le rapport entre le diamètre général moyen D et le diamètre général moyen d étant supérieur ou égal à 2 et étant, de préférence, compris entre 2 et 50.

Ainsi, grâce à la combinaison du canal situé en amont et de la cavité située en aval, ainsi que du rapport particulier entre leurs diamètres respectifs, un champ de pression spécifique se met en place naturellement dans le dispositif. Ce champ de pression permet de réduire, de manière passive, la pénétration de contaminant dans ledit dispositif et ainsi de réduire (de manière passive) la pollution de l'accès optique d'un instrument optique, par exemple un instrument de mesure optique, situé en aval dudit dispositif dans le sens de pénétration d'un rayonnement lumineux (de l'environnement externe vers l'instrument optique). Le dispositif ainsi formé est un dispositif passif qui ne présente donc pas les inconvénients précités des solutions actives usuelles.

Dans un mode de réalisation préféré :
- ledit canal est cylindrique ; et/ou
- ladite cavité est cylindrique.

En outre, avantageusement, ledit dispositif comporte, de plus, une fenêtre de protection agencée au niveau de ladite extrémité ouverte.

Par ailleurs, de façon avantageuse, ladite pièce est réalisée dans un matériau de protection thermique.

De préférence, ledit instrument optique est un instrument de mesure optique.

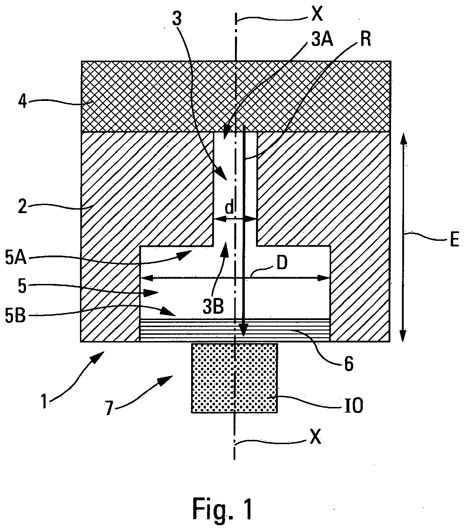

La figure 1 annexée fera bien comprendre comment l'invention peut être réalisée. Cette figure 1 est une vue schématique, en coupe, d'un mode de réalisation particulier d'un dispositif conforme à l'invention.

Le dispositif 1 permettant d'illustrer l'invention et représenté schématiquement sur la figure 1, est destiné à générer, de façon passive, une réduction de la pollution d'un accès (ou chemin) optique d'un instrument optique IO situé dans un environnement polluant (ou contaminant).

Le dispositif 1 s'applique à tout environnement 4 qui est pollué par des contaminants (produits par exemple par une ablation de matière), comme précisé ci-dessous, et qui par cette pollution risque de polluer et d'obstruer l'accès optique, par lequel un rayonnement lumineux (illustré par une flèche R) accède à l'instrument optique IO.

Dans la description suivante, les adverbes « amont » et « aval » sont définis par rapport au sens de pénétration d'un rayonnement lumineux, illustré par la flèche R, à partir de l'environnement pollué 4, généralement extérieur, vers l'instrument optique IO le long du chemin optique.

Selon l'invention, ledit dispositif 1 comporte, comme représenté sur la figure 1, une pièce 2 comportant un corps plein présentant une certaine épaisseur E. Cette pièce 2 réalisée par exemple sous forme d'une plaque (plane ou courbe), est pourvue, selon l'invention :
- d'un canal 3 qui est pratiqué dans le corps de ladite pièce 2. Ce canal 3 présente une première extrémité 3A (amont) destinée à déboucher dans l'environnement pollué et polluant 4. Ledit canal 3 présente un axe longitudinal X-X qui est sensiblement rectiligne et un diamètre général moyen d ; et
- d'une cavité 5 qui est également pratiquée dans le corps de ladite pièce 2.

La cavité 5 est située à une seconde extrémité 3B (aval) du canal 3, opposée à ladite première extrémité 3A (amont). Ladite seconde extrémité 3B du canal 3 débouche dans la cavité 5 au niveau d'une extrémité 5A (amont). Ladite cavité 5 présente une extrémité ouverte 5B (aval) opposée à ladite seconde extrémité 3B du canal 3. Cette extrémité ouverte 5B est destinée à venir en regard de l'instrument optique IO. La cavité 5 présente un diamètre général moyen D.

Dans le cadre de la présente invention, on entend :
- par diamètre général, le diamètre minimal d'un cercle englobant la section transversale du canal ou de la cavité ; et
- par diamètre moyen, la moyenne du diamètre le long du canal ou de la cavité selon l'axe X-X.
De plus, selon l'invention, le rapport R entre le diamètre général moyen D de la cavité 5 et le diamètre général moyen d du canal 3 est supérieur ou égal à 2, et il est, de préférence, compris entre 2 et 50.

Ainsi, grâce à la combinaison du canal 3 situé en amont et de la cavité 5 située en aval, ainsi que du rapport R (R = D/d) particulier entre leurs diamètres respectifs D et d, un champ de pression spécifique se met en place naturellement dans le dispositif 1 et plus particulièrement dans la cavité 5.

Ce champ de pression permet de réduire, de manière passive, la pénétration de contaminant dans ledit dispositif 1 et ainsi de réduire (de manière passive) la pollution de l'accès optique de l'instrument optique IO, par exemple un instrument de mesure optique, qui est situé en aval dudit dispositif 1 dans le sens R de pénétration d'un rayonnement lumineux (de l'environnement externe 4 vers l'instrument optique IO). Ledit dispositif 1 permet d'éliminer ou de réduire la pollution du chemin optique même à très haute enthalpie.

Dans le cadre de la présente invention, le canal 3 doit être suffisamment long pour permettre d'établir le champ de pression.

L'effet généré dans la cavité 5 présente une onde de pression et une zone de recirculation, efficaces pour empêcher le dépôt de contaminants sur l'instrument optique IO.

En plus, de cet effet, l'augmentation très importante de la surface de la section transversale au niveau de la jonction canal/cavité, permet de diminuer le flux de particules (contaminants) pouvant entrer dans le dispositif 1 et atteindre le système optique IO.

Le dispositif 1 ainsi formé est un dispositif passif qui ne présente pas les inconvénients des solutions actives usuelles.

Ce dispositif 1 passif présente de nombreux avantages, en particulier il a un coût réduit, il ne génère pas de masse supplémentaire ou une masse supplémentaire réduite, et il peut être réalisé facilement.

Pour le réaliser, il suffit en effet de pratiquer, notamment par perçage, le canal 3 et la cavité 5 dans la pièce 2, si elle correspond à une pièce (par exemple un panneau de protection, de type ablatif ou non) présente sur l'objet considéré, par exemple un satellite.

Une autre possibilité est de réaliser une pièce 2 monobloc individuelle (pourvue du canal 3 et de la cavité 5) et de la fixer en regard de l'instrument optique que l'on veut protéger de la pollution.

Le canal 3 peut présenter des sections transversales de formes différentes, et son diamètre peut même être légèrement variable.

Toutefois, dans un mode de réalisation préféré, ledit canal 3 est cylindrique, d'axe longitudinal X-X. Un tel canal peut être réalisé facilement.

En outre, dans un mode de réalisation préféré, la cavité 5 est également cylindrique, de même axe longitudinal X-X. Il s'avère que ce mode de réalisation préféré est particulièrement avantageux en participant à la mise en place naturelle d'une zone de recirculation très efficace dans ladite cavité 5. Cette zone de recirculation permet d'amplifier la réduction de la pollution.

Par ailleurs, dans un mode de réalisation particulier, ledit dispositif 1 comporte, de plus, comme représenté également sur la figure 1, une fenêtre de protection 6 qui est agencée au niveau de ladite extrémité ouverte 5B. La fenêtre de protection 6 est transparente au rayonnement lumineux R issu de l'environnement extérieur et destiné à l'instrument optique IO, et elle est réalisée en un matériau, par exemple en saphir, permettant au moins de générer une protection thermique.

Le dispositif 1 de régulation de la pollution du chemin optique, tel que décrit ci-dessus, fait partie d'un ensemble optique 7 qui comporte, de plus, au moins l'instrument optique IO. Cet instrument optique IO est agencé en regard de l'extrémité ouverte 5B de la cavité 5 dudit dispositif 1, comme représenté sur la figure 1.

L'instrument optique IO peut correspondre à tout instrument destiné à recevoir le rayonnement électromagnétique (notamment lumineux) issu de l'environnement extérieur et pénétrant dans le dispositif 1 via le canal 3 et la cavité 5 dans le sens indiqué par la flèche R sur la figure 1.

De préférence, ledit instrument optique IO est un instrument de mesure optique de type OMD (pour « Optical Measurement Device » en anglais).

Dans le cas d'une application à des mesures optiques réalisées lors d'une rentrée atmosphérique, telle que décrite ci-dessus, pour laquelle la pièce 2 peut faire partie d'un panneau de protection thermique, le dispositif 1 permet de diminuer considérablement la pollution du chemin optique et donc d'augmenter la durée possible des mesures.

Le dispositif 1 peut également être utilisée dans d'autres domaines très variés, tels que la mesure optique de processus de combustion d'ergol solide d'un booster de fusée, ou dans d'autres environnements présentant une densité de poussière élevée. Dans l'application à la combustion d'ergol solide d'un booster de fusée, le dispositif 1 permet de réaliser des mesures de récession et de rayonnement directement à l'intérieur du booster solide et ainsi de collecter des données, notamment pour permettre d'optimiser son fonctionnement et augmenter sa rentabilité.

Par ailleurs, le dispositif 1 peut également être utilisé dans le domaine civil, pour protéger des instruments de mesure optique dans le cadre d'une utilisation en ville (pollution par microparticules) ou dans des milieux sujets à des tempêtes de poussière (désert, climat sec).

## Revendications

1. Ensemble optique (1) comprenant un instrument optique (IO) et un dispositif de réduction passive de la pollution d'un accès optique dudit instrument optique situé dans un environnement polluant (4), **caractérisé en ce que** le dispositif de réduction passive de la pollution comporte une pièce (2) pourvue :
- d'un canal (3) pratiqué dans ladite pièce (2) et présentant une première extrémité (3A) ouverte sur l'extérieur de la pièce (2) de manière à déboucher dans l'environnement polluant (4), ledit canal (3) présentant un axe (X-X) sensiblement rectiligne et un diamètre général moyen d ; et
- d'une cavité (5) pratiquée dans ladite pièce (2) à une seconde extrémité (3B) du canal (3), opposée à ladite première extrémité (3A), ladite seconde extrémité (3B) du canal (3) débouchant dans la cavité (5), ladite cavité (5) présentant une extrémité ouverte (5B) opposée à ladite seconde extrémité (3B) du canal (3), ladite cavité (5) présentant un diamètre général moyen D, le rapport entre le diamètre général moyen D et le diamètre général moyen d étant supérieur ou égal à ; 2,
l'ensemble (1) étant configuré pour recevoir un rayonnement (R) d'amont en aval depuis l'environnement polluant (4) suivant une direction de pénétration et l'instrument optique (IO) étant agencé en aval de la pièce (2) et en regard de l'extrémité ouverte (5B) de la cavité (5) pour recevoir le rayonnement (R) qui traverse d'amont en aval le canal (3) et la cavité (5) en pénétrant dans la pièce (2) depuis la première extrémité (3A) du canal (3) et ressortant de la pièce (2) par l'extrémité ouverte (5B) de la cavité (5).

2. Ensemble optique selon la revendication 1, **caractérisé en ce que** ledit canal (3) est cylindrique.

3. Ensemble optique selon l'une des revendications 1 et 2, **caractérisé en ce que** ladite cavité (5) est cylindrique.

4. Ensemble optique selon l'une quelconque des revendications précédentes, caractérisé en que le dispositif de réduction passive de pollution comporte une fenêtre de protection (6) agencée au niveau de ladite extrémité ouverte (5B) de la cavité (5).

5. Ensemble optique selon l'une quelconque des revendications précédentes, caractérisé en que ladite pièce (2) est réalisée dans un matériau de protection thermique.

6. Ensemble optique selon la revendication 1, **caractérisé en ce que** ledit instrument optique (IO) est un instrument de mesure optique.

## Patentansprüche

1. Optische Anordnung (1) mit einem optischen Instrument (IO) und einer Vorrichtung zur passiven Reduzierung der Verschmutzung eines optischen Zugangs des optischen Instruments, das sich in einer verschmutzenden Umgebung (4) befindet,
**dadurch gekennzeichnet, dass** die Vorrichtung zur passiven Reduzierung der Verschmutzung ein Teil (2) enthält, das versehen ist mit:
- einem Kanal (3), der in dem Teil (2) ausgeführt ist und ein erstes Ende (3A) aufweist, das zur Außenseite des Teils (2) hin offen ist, so dass es in die verschmutzende Umgebung (4) mündet, wobei der Kanal (3) eine im Wesentlichen geradlinige Achse (X-X) und einen mittleren Durchmesser d aufweist; und
- einem Hohlraum (5), der in dem Teil (2) an einem dem ersten Ende (3A) entgegengesetzten zweiten Ende (3B) des Kanals ausgeführt ist, wobei das zweite Ende (3B) des Kanals (3) in den Hohlraum (5) mündet, wobei der Hohlraum (5) ein dem zweiten Ende (3B) des Kanals (3) entgegengesetztes offenes Ende (5B) aufweist, wobei der Hohlraum (5) einen mittleren Durchmesser D aufweist, wobei das Verhältnis zwischen dem mittleren Durchmesser D und dem mittleren Durchmesser d größer oder gleich 2 ist, wobei die Anordnung (1) dazu ausgelegt ist, eine Strahlung (R) von stromaufwärts nach stromabwärts von der verschmutzenden Umgebung (4) in einer Eintrittsrichtung zu empfangen, und das optische Instrument (IO) stromabwärts des Teils (2) und dem offenen Ende (5B) des Hohlraums (5) gegenüberliegend angeordnet ist, um die Strahlung (R) zu empfangen, die von stromaufwärts nach stromabwärts durch den Kanal (3) und den Hohlraum (5) tritt und dabei vom ersten Ende (3A) des Kanals (3) in das Teil (2) eintritt und durch das offene Ende (5B) des Hohlraums (5) aus dem Teil (2) austritt.

2. Optische Anordnung nach Anspruch 1,
**dadurch gekennzeichnet, dass** der Kanal (3) zylindrisch ist.

3. Optische Anordnung nach einem der Ansprüche 1 und 2,
**dadurch gekennzeichnet, dass** der Hohlraum (5) zylindrisch ist.

4. Optische Anordnung nach einem der vorstehenden Ansprüche,
**dadurch gekennzeichnet, dass** die Vorrichtung zur passiven Reduzierung der Verschmutzung ein Schutzfenster (6) enthält, das im Bereich des offenen Endes (5B) des Hohlraums (5) angeordnet ist.

5. Optische Anordnung nach einem der vorstehenden Ansprüche,
**dadurch gekennzeichnet, dass** das Teil (2) aus einem Wärmeschutzmaterial hergestellt ist.

6. Optische Anordnung nach Anspruch 1,
**dadurch gekennzeichnet, dass** es sich bei dem optischen Instrument (IO) um ein optisches Messinstrument handelt.

## Claims

1. An optical assembly (1) comprising an optical instrument (OI) and a device for passively reducing pollution of an optical access of said optical instrument located in a polluting environment (4),
**characterised in that** the device for passively reducing pollution includes a part (2) provided with:
- a channel (3) provided in said part (2) and having a first end (3A) open outwardly of the part (2) so as to lead into the polluting environment (4), said channel (3) having a substantially rectilinear axis (X-X) and a mean general diameter d; and
- a cavity (5) provided in said part (2) at a second end (3B) of the channel (3), opposite to said first end (3A), said second end (3B) of the channel (3) leading into the cavity (5), said cavity (5) having an open end (5B) opposite to said second end (3B) of the channel (3), said cavity (5) having a mean general diameter D, the ratio of the mean general diameter D to the mean general diameter d being greater than or equal to: 2,
the assembly (1) being configured to receive a radiation (R) from upstream to downstream from the polluting environment (4) along a penetration direction and the optical instrument (OI) being arranged downstream of the part (2) and facing the open end (5B) of the cavity (5) to receive the radiation (R) which passes from upstream to downstream through the channel (3) and the cavity (5) by penetrating the part (2) from the first end (3A) of the channel (3) and coming out of the part (2) by the open end (5) of the cavity (5).

2. The optical assembly according to claim1,
**characterised in that** said channel (3) is cylindrical.

3. The optical assembly according to one of claims 1 to 2,
**characterised in that** said cavity (5) is cylindrical.

4. The optical assembly according to any of the previous claims,
**characterised in that** the device for passively reducing pollution includes a protection window (6) arranged at said open end (5B) of the cavity (5).

5. The optical assembly according to any of the previous claims,
**characterised in that** said part (2) is made of a thermal protection material.

6. The optical assembly according to claim 1,
**characterised in that** said optical instrument (OI) is an optical measurement instrument.
